# EUROPEAN PATENT APPLICATION

(11) **EP 3 316 151 A1**
(43) Date of publication of application: **02.05.2018**
(21) Application number: 17198411.5
(22) Date of filing: 25.10.2017
(51) Int. Cl.: G06F 17/30, G06Q 30/06

(54) **A METHOD AND SYSTEM FOR INFERRING MOOD AND EMOTIONS FROM SIGNALS CAPTURED BY A MOBILE DEVICE**

(30) Priority: 26.10.2016 IL 24849516
(71) Applicant: Deutsche Telekom AG, 53113 Bonn (DE)
(72) Inventor: Ketabdar, Hamed, 10555 Berlin (DE); Prohl, Matthias, 507674 Köln (DE); Katz, Gilad, 7624843 Rehovot (IL); Shabtai, Asaf, 7684200 Hulda (IL); Elovici, Yuval, 7986400 D.N. Lachish (IL)
(74) Representative: Schollweck, Susanne

(57) **Abstract**

The present invention relates to a method for inferring mood and emotion of a user from a mobile device, comprising the steps of:
a. capturing said mobile device operation and extracting data from said mobile device sensors;
b. analyzing said data extracted from said mobile device sensors; and
c. inferring mood and emotion of said user based on said analyzed data.

## Description

### Field of Invention

The invention relates to the field of recommendation systems. More specifically, the invention relates to inferring mood and emotions from signals captured by a mobile device for the purpose of predictive recommendation.

### Background of the Invention

In the past few years, there has been extensive work on mobile context awareness, predictive recommendation, as well as inferring mood and emotions using data obtained from mobile devices. Several approaches have been proposed that make sense of data collected from a mobile device for inferring context and emotions, as well as sending meaningful recommendations. These approaches use different sources of data such as location, motion of the device, voice, and video, as well as device operation, in order to recognize context.

Building upon several state of the art works in this area, the present invention relates to a few novel approaches, which can be used in the context of a predictive recommendation system, and help in enhancing the prediction of mood, emotions and needs of the user.

It is therefore an object of the present invention to provide methods for inferring context and emotions using different sources of data in a mobile device.

It is another object of the present invention, to provide predictive recommendation based on the context and emotions inferred using different sources of data in a mobile device.

Further purposes and advantages of this invention will appear as the description proceeds.

### Summary of the Invention

In one aspect the invention relates to a method for inferring mood and emotion of a user from a mobile device, comprising the steps of
capturing said mobile device operation and extracting data from said mobile device sensors;
analyzing said data extracted from said mobile device sensors; and
inferring mood and emotion of said user based on the said analyzed data.

In an embodiment of the invention, the method further comprising the step of generating a predictive recommendation to the user based on the inferred mood and emotion.

In an embodiment of the invention, the data is extracted from one or more: motion sensor, sound sensor, location sensors and timer.

In another aspect the invention relates to a system for inferring mood and emotion of a user from a mobile device, comprising:
data extractor which extracts data from said mobile device sensors and captures said mobile device operation;
data analyzer which receive said data extracted by said data extractor and analyzes said data;
mood and emotion inferring module which receives from said analyzer said analyzed data and infers the mood and emotion of said user.

In an embodiment of the invention, the system further comprises a recommendation system which generates a predictive recommendation to the used based on the mood and emotion inferred.

In an embodiment of the invention, the data is extracted from one or more: motion sensor, sound sensor, location sensor and timer.

All the above and other characteristics and advantages of the invention will be further understood through the following illustrative and non-limitative description of embodiments thereof, with reference to the appended drawings.

### Brief Description of the Drawings

- Fig. 1 schematically shows a flowchart of the method of the invention according to an embodiment of the invention; and
- Fig. 2 schematically shows a flowchart of the system of the invention according to an embodiment of the invention.

### Detailed Description of the Embodiment of the Invention

The present invention relates to methods for the recognition of mood and consumption pattern of a user, especially connected with eating and food habits. The invention relates to a few key processes and methods for extracting evidence, which can be employed in combination with state of the art mood analysis approaches. This includes analyzing sounds generated during interaction with a mobile device, stress and sleep pattern analysis, and long term mood forecasting. Sounds generated during touch screen operation and typing can be an indicator of pressure patterns, and can be used as extra attributes in the mood and emotions analysis. Sleep is known to be highly influential in mood, fatigue, consumption pattern, and eating habits. A process and method are presented for using sleep pattern analysis in inferring mood and consumption patterns, and eating preferences of the user. In addition, mood forecasting is presented, based on the mood history of the user which allows for predicting long term mood, and associated needs of the user.

The present invention is based on extracting data from different sensors of a mobile device, analyzing said data and inferring context, emotions and mood of a user according to said data.

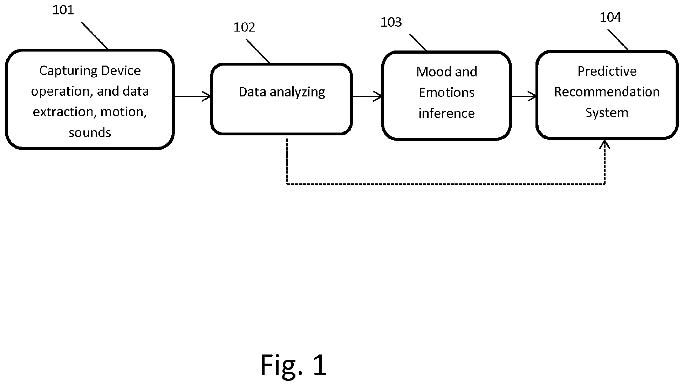

Fig. 1 schematically shows the method of the present invention according to an embodiment of the present invention. In the first step 101 operation signals of the mobile device are captured and data is extracted from the mobile device sensors. For example: motion sensors (accelerometer, gyroscope), sound sensors (microphone), timer, GPS and the like.

In the second step 102, the extracted data is analyzed and in the third step 103 mood and emotion inference is carried out.

In the fourth step 104, a predictive recommendation is proposed to the user, based on the inferenced mood and emotion.

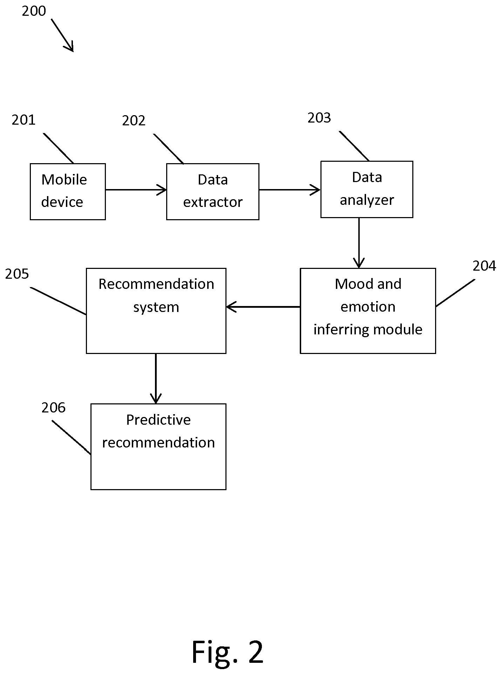

Fig. 2 schematically shows the system of the invention according to an embodiment of the invention. In system 200, a data extractor 202 extracts data from a mobile device 201 sensors, about the operation of the mobile device. The extracted data is then outputted to a data analyzer 203, which analyzes said data and outputs the analyzed data to a mood and emotion inferring module 204, which receives said analyzed data and infers the mood and emotion of the user. A recommendation system 205 receives the mood and emotion inferred and generates a predictive recommendation 206 to the user based on said inferred mood and emotion.

In one embodiment of the invention, a method for recognizing typing patterns is used. There is a class of mood and emotions inference technologies which are using device operation, specifically the pattern of operating the keyboard for recognizing mood and emotions. They use parameters such as speed, correction, and special characters for inferring mood. Modern mobile devices are equipped with touch screens for typing. Touch screens lack the components for sensing pressure exerted on the screen, which can be essential for analyzing typing behavior. In the present invention, the "sound of interaction" is used in order to measure pressure related information and to overcome the problem of the lack of sensing pressure data on the screen of the mobile devices. Normally a higher energy sound should indicate more pressure. The sound data is collected by using the embedded microphone in the mobile device. The energy of the registered sound can be calculated and used as additional attribute in the mood analysis process. The result of the mood analysis process is then used in the predictive recommendation system.

In another embodiment of the invention, data collected from a mobile device during a phone call can be also used for emotion and mood recognition. In this case, the method does not necessarily relate to analyzing speech data during the call for mood recognition. In the present invention, additional information available for enhancing such a mood recognition system is used. More precisely, motion data analyzing is used, as well as pattern of touch between face and screen during a phone call, in order to enhance mood and emotions detection.

Motion of the hand, while holding a phone during a phone call is used as additional indicator for emotions and mood in the conversation. One can add motion data to the voice analysis in order to enhance the mood recognition. In the present invention, motion data during a phone call is obtained using the accelerometer and gyroscope which are integrated in mobile devices. The motion data should be preprocessed within time windows in order to extract attributes. These attributes mainly represent frequency content of the signal, as well as statistical parameters extracted from signals (min, max, variance, correlation).

In an embodiment of the invention, the pattern of touch between the face and touch screen is also used for inferring status of the user, as it can be indicator of fine motion patterns of the device with respect to the face of the user).

In another embodiment of the invention, sleep is used as a factor in forecasting the mood of user. One of the key factors in forecasting the mood of an individual can be quality of sleep. Sleep is shown to be highly correlated with mood. After a sleepless night, one may be more irritable, short-tempered, and vulnerable to stress. Mood and emotions are shown to be highly affecting consumption patterns, eating and food type desire. The method of the present invention analyses quality, timing and duration of sleep for a user, and provides a recommender system with evidences which can enhance converging to actual preferences of the user. For instance, an individual with lack of sleep is more subject to accept coupons related to coffee, snacks and sweets.

In order to obtain sleep related evidences, data collected about operation and motion of the device are used. For instance, the last time the mobile device is operated at night, and the first time the device is operated in the morning can be well correlated with the beginning, ending, timing and duration of sleep. There are research results showing that a mobile device close enough to the user in bed can capture motion information which is highly correlated with sleeping cycles and quality. In order to capture motion, embedded accelerometer and gyroscope sensors are used. Once sleep quality parameters are extracted, they are used in the mood inference process. The mood information can be then used for predicting consumption patterns, type of food desire, etc.

In addition, if people wake up in the middle of the night they may also turn on their phone. This is also something that should be taken into consideration and which teaches about sleep problems or the like.

A recommender system can also use sleep quality analysis data in order to provide user with suggestions which can improve sleeping quality, such as relaxing music, certain food, and medication.

Having contextual data analyzed and obtained using different state of the art approaches, a mood history over time is obtained. Such a mood history is used for short-term and long term mood forecasting. This means that according to the present invention it will be known in advance how a user may feel in the next hours, days and weeks. Considering the fact that such mood information is used for the predictive recommendation process, this means the method of the present invention forecasts preferences of users in future by forecasting their future mood. This allows a longer context and buffer for predictive recommendation system. Such advanced information about its customers can be used for instance, by a business for preparing goods or items in stock and ready to deliver advance in time. This can enhance the delivery process and delay.

Although embodiments of the invention have been described by way of illustration, it will be understood that the invention may be carried out with many variations, modifications, and adaptations, without exceeding the scope of the claims.

## Claims

1. A method for inferring mood and emotion of a user from a mobile device, comprising the steps of
a. capturing said mobile device operation and extracting data from said mobile device sensors;
b. analyzing said data extracted from said mobile device sensors; and
c. inferring mood and emotion of said user based on the said analyzed data.

2. A method according to claim 1, further comprising the step of generating a predictive recommendation to the user based on the inferred mood and emotion.

3. A method according to claim 1, wherein the data is extracted from one or more: motion sensor, sound sensor, location sensors and timer.

4. A system for inferring mood and emotion of a user from a mobile device, comprising:
a. data extractor which extracts data from said mobile device sensors and captures said mobile device operation;
b. data analyzer which receive said data extracted by said data extractor and analyzes said data;
c. mood and emotion inferring module which receives from said analyzer said analyzed data and infers the mood and emotion of said user.

5. A system according to claim 4, further comprises a recommendation system which generates a predictive recommendation to the used based on the mood and emotion inferred.

6. A system according to claim 4, wherein the data is extracted from one or more: motion sensor, sound sensor, location sensor and timer.
